# EUROPEAN PATENT SPECIFICATION

(11) **EP 4 209 348 B1**
(45) Date of publication and mention of the grant of the patent: **21.08.2024**
(21) Application number: 22461501.3
(22) Date of filing: 08.01.2022
(51) Int. Cl.: B33Y 80/00, F28D 1/03, F28D 9/00, F28F 3/02, F28F 3/04, F28F 7/02, F28F 13/08

(54) **HEAT EXCHANGER WITH UNDULATING PARTING SHEETS**
WÄRMETAUSCHER MIT GEWELLTEN TRENNBLECHEN
ÉCHANGEUR DE CHALEUR À FEUILLES DE SÉPARATION ONDULÉES

(43) Date of publication of application: 12.07.2023
(73) Proprietor: Hamilton Sundstrand Corporation, Charlotte, NC 28217 (US)
(72) Inventor: MECZKOWSKI, Tomasz, 51-317 Wroclaw (PL); SIUDZINSKI, Hubert, 51-317 Wroclaw (PL)
(74) Representative: Dehns

(56) References cited:
- EP-A1- 3 296 678
- EP-A1- 3 608 617
- EP-A1- 3 614 091
- DE-A1- 2 540 144
- US-A- 3 255 816
- US-A- 6 019 160

## Description

The present disclosure relates to a layer for a heat exchanger, a heat exchanger, and a method of making a layer for a heat exchanger.

Many heat exchanger designs have a flowpath defined between an inlet of the heat exchanger and an outlet of the heat exchanger, and between upper and lower plates that extend between the inlet and outlet. Heat exchange to or from a fluid flowing in the flowpath occurs primarily through the upper and lower plates. It is known to provide pins that extend in the flowpath, between the upper and lower plates, to improve the heat transfer.

DE 2540144 A1, EP 3296678 A1, US 3255816 A, EP 3608617 A1 and EP 3614091 A1 each disclose some of these known heat exchanger designs.

US 6019160 A discloses a heat layer for a heat exchanger according to the preamble of claim 1 and a heat transfer element assembly wherein the heat transfer plates have notches for maintaining plate spacing (instead of pins) and oblique undulations between the notches. Such conventional heat exchangers have generally been considered satisfactory for their intended purpose but there is a need in the art for improved heat exchangers.

According to a first aspect, there is provided a layer for a heat exchanger, the layer comprising: an inlet; an outlet; an upper sheet; a lower sheet; a fluid flowpath defined between the upper sheet and lower sheet and from the inlet to the outlet; and at least one pin disposed in the flowpath and connecting the upper sheet to the lower sheet; wherein the lower sheet has a first undulating profile; and wherein the upper sheet has a second undulating profile different from the first undulating profile.

Defining a fluid flowpath between upper and lower sheets with different undulating profiles greatly increases the turbulence of the fluid flow in the flowpath. By increasing the turbulence of the fluid flow, the heat transfer of the heat exchanger layer is increased. Furthermore, undulating sheets have an increased primary heat transfer area compared to conventional/straight parting sheets.

Each undulating profile may comprise at least one of: undulations extending along a first axis; and undulations extending along a second axis; wherein the first axis and the second axis are non-parallel.

In other words, the second axis may be oriented at an angle between 0 degrees and 180 degrees from the first axis. For example, the second axis may be perpendicular to (i.e. oriented at 90 degrees from) the first axis. In another example, the second axis may be skewed from the first axis.

The first undulating profile may comprise undulations extending along the first axis and having a first undulation wavelength; and the second undulating profile may comprise undulations extending along the first axis and having a second undulation wavelength different to the first undulation wavelength. Alternatively, the undulation wavelengths extending along the first and second axes may be the same.

The first undulating profile may comprise undulations extending along the first axis and having a first phase of undulation; and the second undulating profile may comprise undulations extending along the first axis and having a second phase of undulation different to the first phase of undulation.

The first undulating profile may comprise undulations extending along the first axis; and the second undulating profile may comprise undulations extending along the first axis; wherein the undulations of the second undulating profile are offset from the undulations of the first undulating profile.

The layer may comprise a plurality of pins disposed in the flowpath, each pin connecting between the upper sheet and lower sheet and having a pin height defined between the upper and lower sheet, wherein at least two of the plurality of pins have different pin heights.

At least one of the upper sheet and the lower sheet may be formed from an aluminium alloy, a titanium alloy, or an austenitic nickel-chromium-based superalloy.

According to another aspect, there is provided a heat exchanger comprising a first layer and a second layer; wherein the first layer is a layer according to the preceding aspect; wherein the second layer is a layer according to the preceding aspect; and wherein the upper sheet of the second layer is also the lower sheet of the first layer.

The upper sheet of the first layer may extend along a first plane and the lower sheet of the first layer may extend along a second plane. The plane may be defined as the plane that bisects the undulating profile, along the direction of the undulations.

The first plane and the second plane may be non-parallel.

In one example, the first plane may be oriented at an angle between 1 and 10 degrees from the second plane. For example, the first plane may be at an angle between 1 and 5 degrees from the second plane.

The first plane and the second plane may be parallel.

The lower sheet of the second layer may extend along a third plane.

The first layer may have a first section undulating around the first plane in a first section of the first layer, and may have a second section wherein the undulations undulate around a different plane. That is, the different plane of the second section may be non-co-planar with the first plane of the first section.

The average distance between the upper and lower sheets of the first layer may be different from the average distance between the upper and lower sheets of the second layer. Put another way, the first layer may have a different average height from the second layer. The number of pins disposed in the flowpath of the first layer may be different from the number of pins disposed in the flowpath of the second layer.

A pin pattern of the pin(s) disposed in the flowpath of the first layer may be different from a pin pattern of the pin(s) disposed in the flowpath of the second layer.

According to another aspect, there is provided a method of additively manufacturing a layer for a heat exchanger, the method comprising: additively manufacturing a lower sheet having a first undulating profile; additively manufacturing at least one pin on the lower sheet; and providing an upper sheet on top of the pin, the upper sheet having a second undulating profile different from the first undulating profile.

Using additive manufacturing may help in the construction of the undulating profile of the lower sheet and/or the upper sheet. Furthermore, construction of the or each pin directly onto a lower sheet with an undulating profile is made easier using additive manufacturing, and the accuracy of placement and orientation of the pins on the undulating profile of the lower sheet may be improved compared to traditional (non-additive) manufacturing methods.

The method may comprise additively manufacturing a plurality of pins on the lower sheet, wherein at least two of the plurality of pins have a different pin height.

The method may comprise additively manufacturing a sidewall extending between the lower sheet and the upper sheet; and optionally additively manufacturing one or more sets of turning vanes on the lower sheet at the same time as additively manufacturing the or each pin.

Additively manufacturing the sidewall may be simpler than using traditional manufacturing techniques. Turning vanes may be desirable in layers having a non-straight flow path, e.g. a U-shaped flow path, and additively manufacturing these may be simpler than using traditional (non-additive) manufacturing techniques.

According to another aspect, there is provided a method of additively manufacturing a heat exchanger, the method comprising: additively manufacturing a first plurality of layers interleaved with a second plurality of layers, wherein each layer of the first and second pluralities of layers is manufactured via the method of the preceding aspect; additively manufacturing a first header fluidly connected to each of the first plurality of layers; and additively manufacturing a second header fluidly connected to each of the second plurality of layers.

Each step of additive manufacturing may be performed using a metal powder bed SLM additive manufacturing process.

A powder of the metal powder bed may be one of an aluminium alloy, a titanium alloy, and an austenitic nickel-chromium-based superalloy.

SLM is a relatively mature additive-manufacturing technology and typically allows recovery of unused (i.e. unmelted) powder from the finished article. The unused powder may be used in future additive-manufacturing operations and thus this method may be cost effective by minimizing wastage of (potentially expensive) metal powder.

The heat exchanger constructed in accordance with this aspect may have a compact design allowing for good heat exchange between fluids flowing in their respective pluralities of layers.

Certain embodiments of the present disclosure will now be described in greater detail by way of example only and with reference to the accompanying drawings in which:
Figure 1 shows a perspective view of a heat exchanger;
Figure 2 shows a plan view of a layer within the heat exchanger;
Figure 3 shows a perspective view of undulated sheets for use in the heat exchanger;
Figure 4 shows a perspective view of a fluid flowpath of the undulated sheets of Figure 3;
Figure 5 shows a side view of two layers formed by three undulated sheets within the heat exchanger;
Figure 6 shows a side view of an example layer within a heat exchanger wherein the upper and lower sheets are non-parallel; and
Figure 7 shows a method of making a heat exchanger.

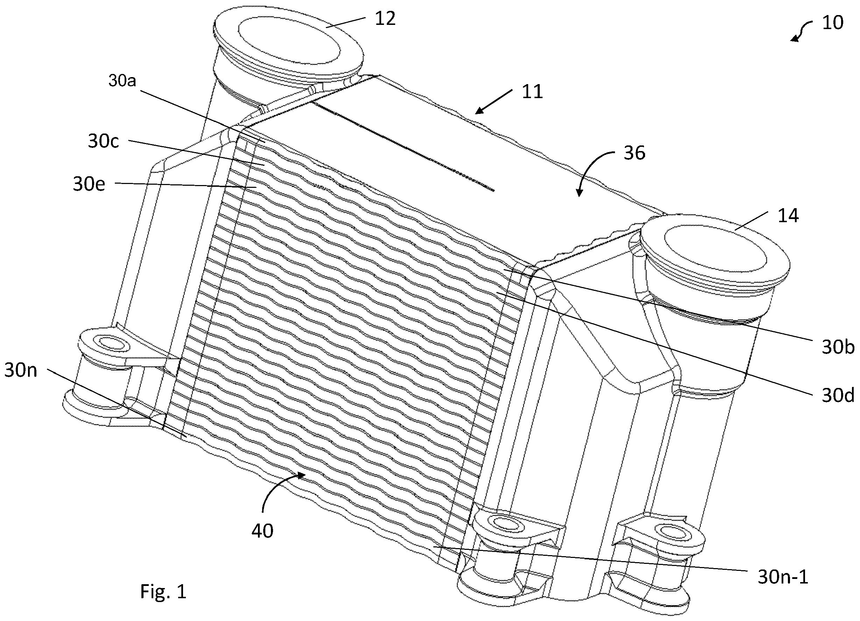

Figure 1 shows a heat exchanger 10 having a heat exchanger core 11, a first header 12 for conveying a first fluid into and out of the core 11, and a second header 14 for conveying a second fluid into and out of the core 11. The heat exchanger may be primarily used to exchange heat between the first fluid and the second fluid. However, heat may also be exchanged out through the sidewall 40 as well as out of the top and bottom sides of the heat exchanger core 11.

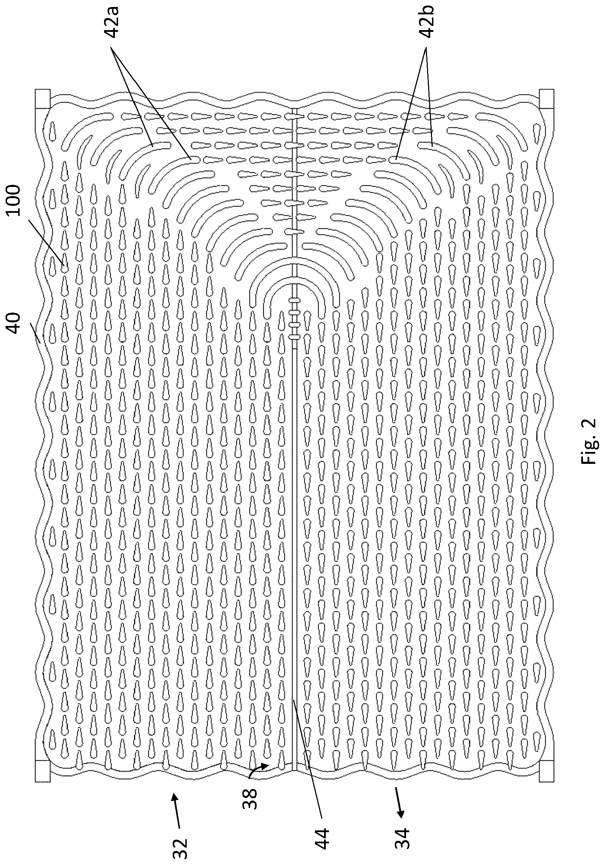

The first header 12 connects to a first plurality of layers 30a,c,e,...30n of the heat exchanger core 11. The second header 14 connects to a second plurality of layers 30b,d,...30n-1 of the heat exchanger core 11. The first plurality of layers 30a,c,e...30n is interleaved with the second plurality of layers 30b,d...30n-1 such that for example, layer 30b is located between layers 30a and 30c. At least within the heat exchanger 10, the first fluid flowing in the first plurality of layers 30a,c,e...30n is fluidly isolated from the second fluid flowing in the second plurality of layers 30b,d...30n-1. These layers may be generically referred to by reference numeral 30 and any layer of the first and second pluralities of layers may be a layer 30 as shown in Figure 2.

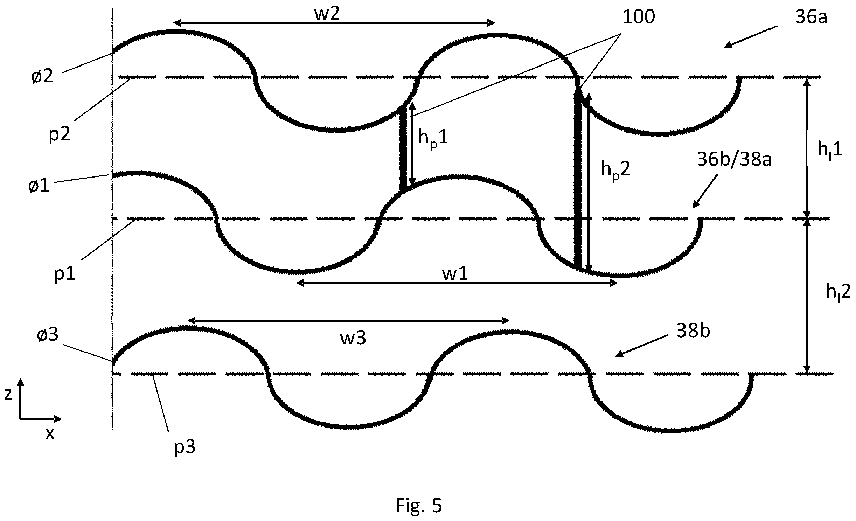

As shown in Figure 2, the layer 30 comprises an inlet 32 and an outlet 34, a sidewall 40, and (with brief reference to Figure 5) an upper sheet 36, and a lower sheet 38. In use, fluid is constrained by the upper sheet 36, lower sheet 38, and sidewall 40, so as to flow from the inlet 32, through the layer 30, to the outlet 34. That is, the upper sheet 36, lower sheet 38, and sidewall 40 together define a flowpath for fluid flowing in the layer 30. The layer 30 shown in Figure 2 defines a generally U-shaped flowpath between the inlet 32 and outlet 34. The upper sheet 36 of a given layer (e.g. layer 30b), may simultaneously function as the lower sheet 38 of layer (e.g. layer 30a) immediately above.

With reference to Figure 1, a first portion of the first header 12 connects to the inlet side 30 of each layer 30a,c,e...n of the first plurality of layers, and, in use, fluid is pumped into the first portion and flows into the inlet side 32 of every layer connected to the first header 12. The fluid flows through each of the layers 30a,c,e...n and out through the outlet 34 of each layer 30a,c,e...n of the first plurality of layers. The outlets 34 are all connected to a second portion of the first header 12, the second portion being fluidly isolated from the first portion. Fluid flows into the second portion and then out of the first header 12.

Similarly, a first portion of the second header 14 connects to the inlet side 30 of each layer 30b,d...n-1 and, in use, fluid is pumped into the first portion and flows into the inlet side 32 of every layer connected to the second header 14. The fluid flows through each of the layers 30a,c,e,...n and out through the outlet 34 of each layer. The outlets 34 are all connected to the second portion of the second header 14, the second portion being fluidly isolated from the first portion. Fluid flows into the second portion and then out of the second header 14.

Within each layer 30, as shown in Figure 2, one or more pins 100 are disposed in the fluid flowpath. Each pin 100 extends between the lower sheet 38 and the upper sheet 36.

Additionally, there may be provided within each layer 30 a first set of turning vanes 42a that may turn the flow through 90 degrees, and a second set of turning vanes 42b that may turn the flow through a further 90 degrees, to create the overall U-shaped flow path. A plurality of pins 100 may be disposed between the first and second sets of turning vanes 42a,b. The pins 100 shown in Figure 2 are all arranged within the layer 30 such that each pin 100 faces directly into a local flow direction.

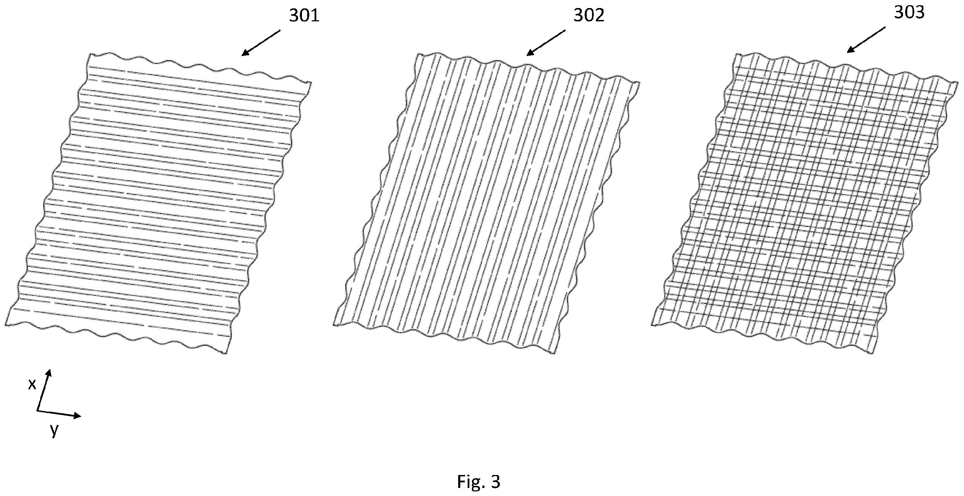

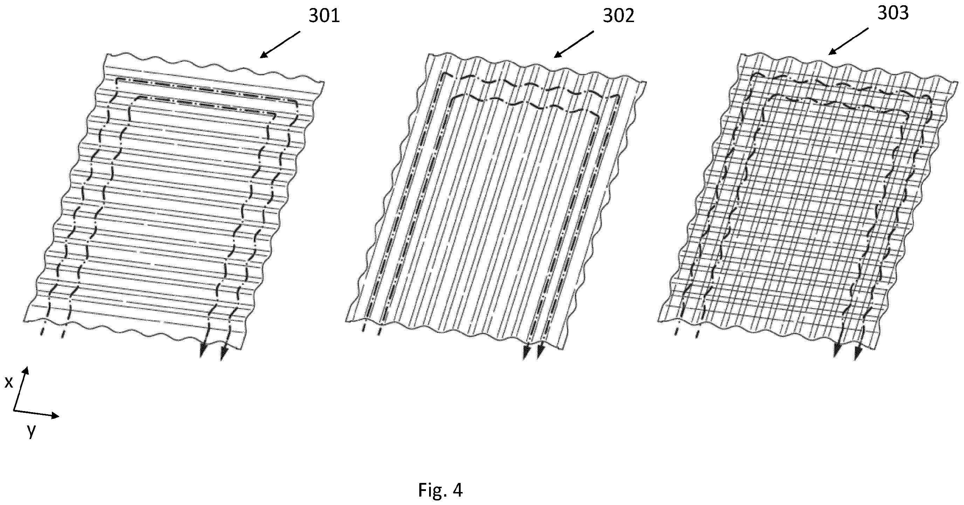

Figure 3 shows three sheets 301, 302, 303 (each of which may act as an upper or a lower sheet of a layer 30), each sheet having a different undulating profile. Figure 4 shows sheets 301, 302, 303 with some exemplary fluid flowpaths that fluid may take when moving across the sheet.

Sheet 301 has an undulating profile comprising undulations extending along a first axis X.

Sheet 302 has an undulating profile comprising undulations extending along a second axis Y which is non-parallel with the first axis X. In the example shown in Figure 3b, the second axis Y is perpendicular to the first axis X, i.e. the second axis Y is oriented at 90 degrees from the first axis X. However, in other examples, the second axis Y may be oriented at any angle between 0 degrees and 180 degrees from the first axis, e.g. at 30 degrees or at 45 degrees. That is, the second axis Y is different from the first axis X, and may be 90 degrees to the first axis X or skew to the first axis X. The first axis X lies in the plane of sheet 301 and the second axis Y lies in the plane of sheet 302.

Sheet 303 has an undulating profile comprising undulations extending along the first axis X and undulations extending along the second axis Y. Again, in this example the second axis Y is shown as perpendicular to the first axis X. In other examples, second axis Y may extend at a different angle (i.e. not 90 degrees) to the first axis X. The first axis X and second axis Y lie in the plane of sheet 303.

In an example layer 30, sheet 301 forms one of the upper or lower sheet of the layer, and sheet 302 forms the other of the upper or lower sheet of the layer. As the undulating profiles of these sheets are different (in this example, the undulations of each sheet extends along different axes), the flowpath defined between these sheets 301, 302 causes increased turbulence of the fluid flowing through it, and thus increases the mixing of fluid particles. By increasing the turbulence of the flow, the heat transfer coefficient of the layer is increased, thus improving the efficiency of the heat exchanger.

In another example, a layer 30 comprises sheet 303 as an upper (or lower) sheet and comprise sheet 301 or sheet 302 as the corresponding lower (or upper) sheet. The undulating profile of sheet 303 comprises an additional set of undulations compared to the undulating profile of sheet 301 or sheet 302 which extends along a different axis (i.e. non-parallel) to the axis of the undulations of sheet 301 or sheet 302, and such an arrangement of sheets thus increases the turbulence of the fluid flowing between. Exemplary fluid paths, which are dictated by the undulating profiles of each of sheet 301, sheet 302, and sheet 303, are shown in Figure 4.

Figure 5 shows a side view of a first layer 30a and a second layer 30b in the heat exchanger 10. As shown, lower sheet 38a of the first layer 30a has an undulating profile comprising undulations extending at least along a first axis X, and upper sheet 36a of the first layer 30a also has an undulating profile comprising undulations extending at least along a first axis X. The undulations of each sheet comprise a sequence of alternating peaks and troughs. The undulations may be sinusoidal. The undulations may have a wavelength and a phase. The wavelength of the undulations may be constant, e.g. a distance between each consecutive peak of the undulations is constant.

As shown in Figure 5, in order to increase turbulence of the fluid flow in the layer 30a, the undulations of the lower sheet 38a have a first wavelength w1 that is longer than a second wavelength w2 of the undulations of the upper sheet 36a. In other words, a first distance between the peaks of the undulations of the lower sheet 38a may be greater than a second distance between the peaks of the undulations of the upper sheet 36a.

Furthermore, in Figure 5, a first phase ø1 of the undulations of the lower sheet 38a is different from a second phase ø2 of the undulations of the upper sheet 36a. In other words, the undulations of the lower sheet 38a are offset from the undulations of the upper sheet 36a to promote turbulent flow in the heat exchanger layer 30a.

In the heat exchanger 10, as shown Figure 5, the lower sheet 38a of the first layer 30a may simultaneously function as an upper sheet 36b of a second layer 30b, and in that case the undulating profile of the upper sheet 36b of layer 30b is also the undulating profile of the lower sheet 38a of layer 30a.

The upper sheet 36a of layer 30a, which has an undulating profile different to that of the lower sheet 38a, may have an undulating profile the same as that of the lower sheet 38b of layer 30a (e.g. so the undulating profiles of the sheets in the heat exchanger alternate). Alternatively, the undulating profiles of the sheets may be randomly ordered (or ordered in some other manner) provided the undulating profiles of adjacent sheets (i.e. sheets that together form a single layer 30) are different from one another.

In Figure 5, the undulations of the lower sheet 38b that are extending along a first axis X have a third wavelength w3 that is different to the first wavelength w1 but the same as the second wavelength w2, and a third phase ø3 that is different to the first phase ø1 and the second phase ø2.

As discussed above, the sheets of the first layer 30a and second layer 30b may or may not have undulations extending along the second axis Y, but these are not visible in Figure 5.

The pins 100 in the layer 30a are arranged in a pin pattern adapted to suit the requirements of the layer 30a, e.g. considering the undulating profile of the upper sheet 36a and the undulating profile of the lower sheet 38a. Each pin 100 extends between the upper and lower sheet, defining a pin height hₚ. The pin height of each pin is dependent on the positioning of the pins 100 (e.g. the pin pattern) relative to the undulating profiles of the upper sheet and the lower sheet. As such, at least two of the plurality of pins may have different pin heights. For example, a short pin may have a height hₚ1 and be positioned at or near to a peak of an undulation of the lower sheet 38a and connected to the upper sheet 36 at or near to a trough of an undulation of the upper sheet 36a. A long pin may have a height hₚ2 and be positioned at or near to a trough of the lower sheet 38a so that it may be connected to the upper sheet 36b at or near a peak of an undulation of the upper sheet 36a. In this example, the long pin having height hₚ2 is longer than the short pin having a height hₚ1.

The first layer 30a may have a different number of pins and/or a different pin pattern from the second layer 30b.

Each sheet, not considering the undulating profile, is generally planar in shape, e.g. each sheet generally extends along a plane XY, and the undulations are variations in the "z" direction. In other words, in a generic layer 30, a lower sheet 38 extends along a first plane p1 and an upper sheet 36 extends along a second plane p2. The first plane p1 and the second plane p2 are disposed apart from each other so the upper sheet 36 and lower sheet 38 define the flowpath therebetween. The plane may be defined as the plane that bisects the undulating profile along the direction of undulations of a given sheet.

As shown in the example in Figure 5, the first plane p1 and the second plane p2 may be parallel (and a third plane p3 of the lower sheet 38b of the second layer 30b may also be parallel with the first plane p1 and the second plane p2). In other words, the layer 30a has a constant average height (note, due to the upper and lower sheets having different undulations e.g. in terms of phase, undulation-direction etc., the height at one point within the layer will differ from the height in another location within that layer). An average height of each layer of the first plurality of layers 30a,c,e...30n may be different from an average height of each layer of the second plurality of layers 30b,d...30n-1. This may have particular advantages where the first fluid is different from the second fluid.

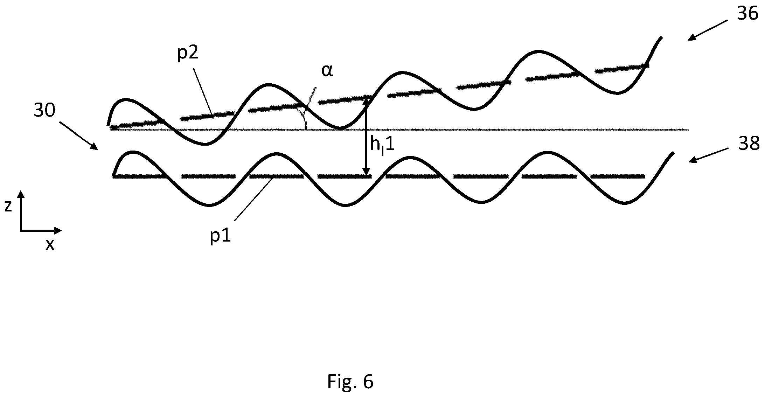

In the example shown in Figure 6, the first plane p1 and the second plane p2 are non-parallel. The first plane p1 may be oriented at an angle α between 0 and 10 degrees (e.g. 0°<α≤10°) from the second plane p2 along the X axis, as shown in Figure 6. In one example, 5°≤α≤10°. Alternatively or additionally, the first plane p1 and the second plane p2 may be oriented at an angle β between 0 and 10 degrees (e.g. 0°<β≤10°) from the second plane p2 along the Y axis (not shown). In one example, 5°≤β≤10°. Angling the upper sheet 36 and lower sheet 38 relative to each other may further increase turbulence of the fluid flow in the layer 30.

Each sheet may have a first section undulating around the first plane in a first section of the first layer, and may have a second section wherein the undulations undulate around a different plane. That is, the different plane may be non-co-planar with the first plane of the first section.

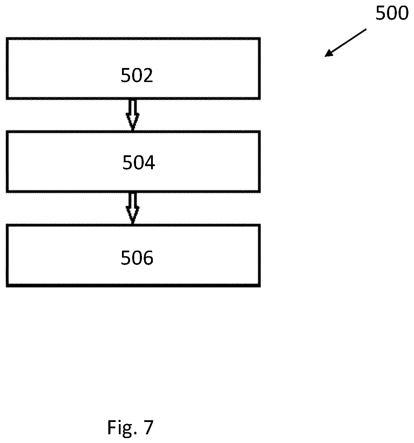

Each layer 30 may be produced by additive manufacturing, such as by the process shown in Figure 7. In the method 500, a lower sheet 38 is additively manufactured, the lower sheet 38 having a first undulating profile (step 502). At step 504, pins 100 are additively manufactured on the lower sheet 38. At step 506, an upper sheet 36 is provided on top of the pins 100, the upper sheet 36 having a second undulating profile different from the first undulating profile.

The process may optionally include additively manufacturing one or more of: the sidewall 40, turning vanes 42a,b, further layers 30 on top of the initially formed layer 30, and one or more headers connecting to each layer 30.

Each layer 30 may be produced by a SLM powder-bed method of additive manufacturing. In this method, a first layer of metal powder is provided and a portion of the powder is melted by a laser beam to "print" the first layer of the overall object. The first layer is then lowered and a second layer of powder is brushed over the first layer, and a portion of the second layer of powder is melted by the laser beam to print a second layer of the overall object. In this way, a three-dimensional object is built-up layer-by-layer and, once all layers of the object have been printed, the loose (i.e. unmelted) powder is removed to reveal the object.

The upper sheet 36 may be a pre-existing (e.g. manufactured by a previous additive manufacturing process) layer that is connected to the top of the pins 100 after construction of the pins 100 on the lower sheet 38. Alternatively, the upper sheet 38 may be additively manufactured after the pins 100 have been manufactured, by continuing the additive manufacturing process.

After a first layer 30 (e.g. layer 30n) of the heat exchanger core 11 is formed, a new layer 30 (e.g. layer 30n-1) may be formed directly on top of the first layer 30. In this case, the upper sheet 36 of the first layer 30 becomes the bottom sheet 38 of the new layer 30. That is, the same layer of material may simultaneously function as the upper sheet 36 of one layer 30, and the bottom sheet 38 of another layer 30.

The sidewall 40 may have an undulating cross-section, e.g. as shown in Figures 1 and 2. This may increase the heat transfer across the sidewall 40 and/or may increase the strength of the sidewall for a given wall thickness.

Any or all parts of the heat exchanger 10 may be made from metal. In some embodiments, some or all parts are made from an austenitic nickel-chromium-based superalloy, such as the Iconel family of metals manufactured by the Special Metals Corporation of New York state, USA. In other embodiments, some or all parts may be made from an aluminium alloy or a titanium alloy.

The first and second fluids may be oil, such that the heat exchanger 10 is an oil-oil heat exchanger. However, in other embodiments, the first fluid may be different from the second fluid. Other fluids, including air, water, fuel(s), or carbon dioxide are also envisaged for either or both of the first and second fluids.

## Claims

1. A layer (30) for a heat exchanger (10), the layer comprising:
an inlet (32);
an outlet (34);
an upper sheet (36);
a lower sheet (38);
a fluid flowpath defined between the upper sheet and lower sheet and from the inlet to the outlet;
wherein the lower sheet has a first undulating profile; and
wherein the upper sheet has a second undulating profile different from the first undulating profile, **characterised by** at least one pin (100) disposed in the flowpath and connecting the upper sheet to the lower sheet.

2. The layer according to claim 1, wherein each undulating profile comprises at least one of:
undulations extending along a first axis (X); and
undulations extending along a second axis (Y);
wherein the first axis and the second axis are non-parallel.

3. The layer according to claim 2, wherein the first undulating profile comprises undulations extending along the first axis (X) and having a first undulation wavelength (w1); and the second undulating profile comprises undulations extending along the first axis (X) and having a second undulation wavelength (w2) different to the first undulation wavelength.

4. The layer according to claim 2 or claim 3, wherein the first undulating profile comprises undulations extending along the first axis (X) and having a first phase of undulation (ø1); and the second undulating profile comprises undulations extending along the first axis (X) and having a second phase of undulation (ø2) different to the first phase of undulation.

5. The layer according to any preceding claim, comprising a plurality of pins (100) disposed in the flowpath, each pin connecting between the upper sheet (36) and lower sheet (38) and having a pin height (hₚ) defined between the upper and lower sheet, wherein at least two of the plurality of pins have different pin heights.

6. The layer according to any preceding claim, wherein at least one of the upper sheet (36) and the lower sheet (38) are formed from an aluminium alloy, a titanium alloy, or an austenitic nickel-chromium-based superalloy.

7. A heat exchanger (10) comprising a first layer (30a) and a second layer (30b);
wherein the first layer is a layer according to any of claims 1 to 6;
wherein the second layer is a layer according to any of claims 1 to 6; and
wherein the upper sheet (36b) of the second layer (30b) is also the lower sheet (38a) of the first layer (30a).

8. The heat exchanger according to claim 7, wherein the upper sheet (36a) of the first layer (30a) extends along a first plane (p1) and the lower sheet (38a) of the first layer (30a) extends along a second plane (p2), and wherein the first plane and second plane are not parallel.

9. The heat exchanger according to claim 7, wherein the upper sheet (36a) of the first layer (30a) extends along a first plane (p1) and the lower sheet (38a) of the first layer (30a) extends along a second plane (p2), and wherein the first plane and second plane are parallel.

10. The heat exchanger according to claim 9, wherein the lower sheet (38b) of the second layer (30b) extends along a third plane (p3), the third plane (p3) being parallel with the first plane (p1) and the second plane (p2); and wherein an average height (hₗ1) defined between the upper and lower sheets of the first layer (30a) is different from an average height (hₗ2) defined between the upper and lower sheets of the second layer (30b).

11. The heat exchanger according to any of claims 7 to 10; wherein the number of pins (100a) disposed in the flowpath of the first layer (30a) is different from the number of pins (100b) disposed in the flowpath of the second layer (30b).

12. A method of additively manufacturing a layer (30) for a heat exchanger (10), the method comprising:
additively manufacturing a lower sheet (38) having a first undulating profile;
additively manufacturing at least one pin (100) on the lower sheet (38); and
providing an upper sheet (36) on top of the pin (100), the upper sheet having a second undulating profile different from the first undulating profile.

13. The method according to claim 12, comprising additively manufacturing a plurality of pins (100) on the lower sheet (38), wherein at least two of the plurality of pins have a different pin height (hₚ).

14. A method of additively manufacturing a heat exchanger (10), the method comprising:
additively manufacturing a first plurality of layers (30a, 30c, 30e...30n) interleaved with a second plurality of layers (30b, 30d, 30f...30n-1), wherein each layer of the first and second pluralities of layers is manufactured via the method of claim 12 or 13;
additively manufacturing a first header (12) fluidly connected to each of the first plurality of layers; and
additively manufacturing a second header (14) fluidly connected to each of the second plurality of layers.

15. The method according to any of claims 12 to 14, wherein each step of additive manufacturing is performed using a metal powder bed SLM additive manufacturing process, optionally wherein a powder of the metal powder bed is one of an aluminium alloy, a titanium alloy, and an austenitic nickel-chromium-based superalloy.

## Patentansprüche

1. Schicht (30) für einen Wärmetauscher (10), wobei die Schicht Folgendes umfasst:
einen Einlass (32);
einen Auslass (34);
ein oberes Blech (36);
ein unteres Blech (38);
einen Fluidströmungsweg, der zwischen dem oberen und unteren Blech und von dem Einlass zu dem Auslass definiert ist;
wobei das untere Blech ein erstes gewelltes Profil aufweist; und
wobei das obere Blech ein zweites gewelltes Profil aufweist, das sich von dem ersten gewellten Profil unterscheidet, **gekennzeichnet durch** mindestens einen Stift (100), der in dem Strömungsweg angeordnet ist und das obere Blech mit dem unteren Blech verbindet.

2. Schicht nach Anspruch 1, wobei jedes gewellte Profil mindestens eines der Folgenden umfasst:
Wellen, die sich entlang einer ersten Achse (X) erstrecken; und
Wellen, die sich entlang einer zweiten Achse (Y) erstrecken;
wobei die erste Achse und die zweite Achse nicht parallel sind.

3. Schicht nach Anspruch 2, wobei das erste gewellte Profil Wellen umfasst, die sich entlang der ersten Achse (X) erstrecken und eine erste Wellenwellenlänge (w1) aufweisen; und das zweite gewellte Profil Wellen umfasst, die sich entlang der ersten Achse (X) erstrecken und eine zweite Wellenwellenlänge (w2) aufweisen, die sich von der ersten Wellenwellenlänge unterscheidet.

4. Schicht nach Anspruch 2 oder Anspruch 3, wobei das erste gewellte Profil Wellen umfasst, die sich entlang der ersten Achse (X) erstrecken und eine erste Wellenphase (ø1) aufweisen; und das zweite gewellte Profil Wellen umfasst, die sich entlang der ersten Achse (X) erstrecken und eine zweite Wellenphase (ø2) aufweisen, die sich von der ersten Wellenphase unterscheidet.

5. Schicht nach einem der vorhergehenden Ansprüche, umfassend eine Vielzahl von Stiften (100), die in dem Strömungsweg angeordnet sind, wobei jeder Stift eine Verbindung zwischen dem oberen Blech (36) und dem unteren Blech (38) bildet und eine zwischen dem oberen und unteren Blech definierte Stifthöhe (hₚ) aufweist, wobei mindestens zwei der Vielzahl von Stiften unterschiedliche Stifthöhen aufweisen.

6. Schicht nach einem der vorhergehenden Ansprüche, wobei mindestens eines von dem oberen Blech (36) und dem unteren Blech (38) aus einer Aluminiumlegierung, einer Titanlegierung oder einer austenitischen Superlegierung auf Nickel-Chrom-Basis gebildet ist.

7. Wärmetauscher (10), umfassend eine erste Schicht (30a) und eine zweite Schicht (30b);
wobei die erste Schicht eine Schicht nach einem der Ansprüche 1 bis 6 ist;
wobei die zweite Schicht eine Schicht nach einem der Ansprüche 1 bis 6 ist; und
wobei das obere Blech (36b) der zweiten Schicht (30b) zugleich das untere Blech (38a) der ersten Schicht (30a) ist.

8. Wärmetauscher nach Anspruch 7, wobei sich das obere Blech (36a) der ersten Schicht (30a) entlang einer ersten Ebene (p1) erstreckt und sich das untere Blech (38a) der ersten Schicht (30a) entlang einer zweiten Ebene (p2) erstreckt und wobei die erste Ebene und die zweite Ebene nicht parallel sind.

9. Wärmetauscher nach Anspruch 7, wobei sich das obere Blech (36a) der ersten Schicht (30a) entlang einer ersten Ebene (p1) erstreckt und sich das untere Blech (38a) der ersten Schicht (30a) entlang einer zweiten Ebene (p2) erstreckt und wobei die erste Ebene und die zweite Ebene parallel sind.

10. Wärmetauscher nach Anspruch 9, wobei sich das untere Blech (38b) der zweiten Schicht (30b) entlang einer dritten Ebene (p3) erstreckt, wobei die dritte Ebene (p3) parallel zu der ersten Ebene (p1) und zu der zweiten Ebene (p2) ist; und wobei sich eine zwischen dem oberen und unteren Blech der ersten Schicht (30a) definierte Durchschnittshöhe (hₗ1) von einer zwischen dem oberen und unteren Blech der zweiten Schicht (30b) definierten Durchschnittshöhe (hₗ2) unterscheidet.

11. Wärmetauscher nach einem der Ansprüche 7 bis 10, wobei sich die Anzahl der in dem Strömungsweg der ersten Schicht (30a) angeordneten Stifte (100a) von der Anzahl der in dem Strömungsweg der zweiten Schicht (30b) angeordneten Stifte (100b) unterscheidet.

12. Verfahren zum additiven Fertigen einer Schicht (30) für einen Wärmetauscher (10), wobei das Verfahren Folgendes umfasst:
additives Fertigen eines unteren Bleches (38) mit einem ersten gewellten Profil;
additives Fertigen mindestens eines Stiftes (100) auf dem unteren Blech (38); und
Bereitstellen eines oberen Bleches (36) oben auf dem Stift (100), wobei das obere Blech ein zweites gewelltes Profil aufweist, das sich von dem ersten gewellten Profil unterscheidet.

13. Verfahren nach Anspruch 12, umfassend additives Fertigen einer Vielzahl von Stiften (100) auf dem unteren Blech (38), wobei mindestens zwei der Vielzahl von Stiften eine unterschiedliche Stifthöhe (hₚ) aufweisen.

14. Verfahren zum additiven Fertigen eines Wärmetauschers (10), wobei das Verfahren Folgendes umfasst:
additives Fertigen einer ersten Vielzahl von Schichten (30a, 30c, 30e...30n), die mit einer zweiten Vielzahl von Schichten (30b, 30d, 30f...30n-1) verschachtelt sind, wobei jede Schicht der ersten und zweiten Vielzahl von Schichten mittels des Verfahrens nach Anspruch 12 oder 13 gefertigt wird;
additives Fertigen eines ersten Verteilers (12), der mit jeder der ersten Vielzahl von Schichten fluidisch verbunden ist; und
additives Fertigen eines zweiten Verteilers (14), der mit jeder der zweiten Vielzahl von Schichten fluidisch verbunden ist.

15. Verfahren nach einem der Ansprüche 12 bis 14, wobei jeder Schritt des additiven Fertigens unter Verwendung eines Verfahrens zum additiven Fertigen mit Metallpulverbett (SLM) durchgeführt wird, wobei ein Pulver des Metallpulverbetts optional eine Aluminiumlegierung, eine Titanlegierung oder eine austenitische Superlegierung auf Nickel-Chrom-Basis ist.

## Revendications

1. Couche (30) pour un échangeur de chaleur (10), l'échangeur de chaleur comprenant :
une entrée (32) ;
une sortie (34) ;
une feuille supérieure (36) ;
une feuille inférieure (38) ;
un chemin d'écoulement de fluide défini entre la feuille supérieure et la feuille inférieure et à partir de l'entrée jusqu'à la sortie ;
dans laquelle la feuille inférieure a un premier profil ondulé ; et
dans laquelle la feuille supérieure a un second profil ondulé différent du premier profil ondulé, **caractérisée par** au moins une broche (100) disposée dans le chemin d'écoulement et connectant la feuille supérieure à la feuille inférieure.

2. Couche selon la revendication 1, dans laquelle chaque profil ondulé comprend au moins l'un parmi :
des ondulations s'étendant le long d'un premier axe (X) ; et
des ondulations s'étendant le long d'un second axe (Y) ;
dans laquelle le premier axe et le second axe sont non parallèles.

3. Couche selon la revendication 2, dans laquelle le premier profil ondulé comprend des ondulations s'étendant le long du premier axe (X) et ayant une première longueur d'onde d'ondulation (w1) ; et le second profil ondulé comprend des ondulations s'étendant le long du premier axe (X) et ayant une seconde longueur d'onde d'ondulation (w2) différente de la première longueur d'onde d'ondulation.

4. Couche selon la revendication 2 ou la revendication 3, dans laquelle le premier profil ondulé comprend des ondulations s'étendant le long du premier axe (X) et ayant une première phase d'ondulation (ø1) ; et le second profil ondulé comprend des ondulations s'étendant le long du premier axe (X) et ayant une seconde phase d'ondulation (ø2) différente de la première phase d'ondulation.

5. Couche selon une quelconque revendication précédente, comprenant une pluralité de broches (100) disposées dans le chemin d'écoulement, chaque broche se connectant entre la feuille supérieure (36) et la feuille inférieure (38) et ayant une hauteur de broche (hₚ) définie entre les feuilles supérieure et inférieure, dans laquelle au moins deux de la pluralité de broches ont des hauteurs de broche différentes.

6. Couche selon une quelconque revendication précédente, dans laquelle au moins l'une parmi la feuille supérieure (36) et la feuille inférieure (38) est formée à partir d'un alliage d'aluminium, d'un alliage de titane ou d'un superalliage austénitique à base de nickel-chrome.

7. Échangeur de chaleur (10) comprenant une première couche (30a) et une seconde couche (30b) ;
dans lequel la première couche est une couche selon l'une quelconque des revendications 1 à 6 ;
dans lequel la seconde couche est une couche selon l'une quelconque des revendications 1 à 6 ; et
dans lequel la feuille supérieure (36b) de la seconde couche (30b) est également la feuille inférieure (38a) de la première couche (30a).

8. Échangeur de chaleur selon la revendication 7, dans lequel la feuille supérieure (36a) de la première couche (30a) s'étend le long d'un premier plan (p1) et la feuille inférieure (38a) de la première couche (30a) s'étend le long d'un deuxième plan (p2), et dans lequel le premier plan et le deuxième plan ne sont pas parallèles.

9. Échangeur de chaleur selon la revendication 7, dans lequel la feuille supérieure (36a) de la première couche (30a) s'étend le long d'un premier plan (p1) et la feuille inférieure (38a) de la première couche (30a) s'étend le long d'un deuxième plan (p2), et dans lequel le premier plan et le deuxième plan sont parallèles.

10. Échangeur de chaleur selon la revendication 9, dans lequel la feuille inférieure (38b) de la seconde couche (30b) s'étend le long d'un troisième plan (p3), le troisième plan (p3) étant parallèle au premier plan (p1) et au deuxième plan (p2) ; et dans lequel une hauteur moyenne (hₗ1) définie entre les feuilles supérieure et inférieure de la première couche (30a) est différente d'une hauteur moyenne (hₗ2) définie entre les feuilles supérieure et inférieure de la seconde couche (30b).

11. Échangeur de chaleur selon l'une quelconque des revendications 7 à 10 ; dans lequel le nombre de broches (100a) disposées dans le chemin d'écoulement de la première couche (30a) est différent du nombre de broches (100b) disposées dans le chemin d'écoulement de la seconde couche (30b).

12. Procédé de fabrication additive d'une couche (30) pour un échangeur de chaleur (10), le procédé comprenant :
la fabrication additive d'une feuille inférieure (38) ayant un premier profil ondulé ;
la fabrication additive d'au moins une broche (100) sur la feuille inférieure (38) ; et
la fourniture d'une feuille supérieure (36) au-dessus de la broche (100), la feuille supérieure ayant un second profil ondulé différent du premier profil ondulé.

13. Procédé selon la revendication 12, comprenant la fabrication additive d'une pluralité de broches (100) sur la feuille inférieure (38), dans lequel au moins deux de la pluralité de broches ont une hauteur de broche différente (hₚ).

14. Procédé de fabrication additive d'un échangeur de chaleur (10), le procédé comprenant :
la fabrication additive d'une première pluralité de couches (30a, 30c, 30e... 30n) entrelacées avec une seconde pluralité de couches (30b, 30d, 30f... 30n-1), dans lequel chaque couche des première et seconde pluralités de couches est fabriquée via le procédé selon la revendication 12 ou 13 ;
la fabrication additive d'un premier collecteur (12) connecté fluidiquement à chacune de la première pluralité de couches ; et
la fabrication additive d'un second collecteur (14) connecté fluidiquement à chacune de la seconde pluralité de couches.

15. Procédé selon l'une quelconque des revendications 12 à 14, dans lequel chaque étape de fabrication additive est exécutée à l'aide d'un processus de fabrication additive SLM sur lit de poudre métallique, éventuellement dans lequel une poudre du lit de poudre métallique est un alliage d'aluminium, un alliage de titane et un superalliage austénitique à base de nickel-chrome.
